# EUROPEAN PATENT SPECIFICATION

(11) **EP 4 102 663 B1**
(45) Date of publication and mention of the grant of the patent: **09.07.2025**
(21) Application number: 22175170.4
(22) Date of filing: 24.05.2022
(51) Int. Cl.: H02G 5/00, H02G 5/06, H02G 5/02, H02G 1/00, H02G 3/00

(54) **MOUNTING ASSEMBLY FOR ELECTRICAL BUSWAY**
MONTAGEANORDNUNG FÜR ELEKTRISCHE SAMMELSCHIENE
ENSEMBLE DE MONTAGE POUR CONDUCTEURS OMNIBUS

(30) Priority: 11.06.2021 IN 202131026052
(43) Date of publication of application: 14.12.2022
(73) Proprietor: Schneider Electric Industries SAS, 92500 Rueil-Malmaison (FR)
(72) Inventor: JAGADEESWARAN, Nithiyia Prakash, 641107 Coimbatore, Tamil Nadu (IN); BALASUBRAMANI, Karthik Kannan, 636006 Salem, Tamil Nadu (IN); BAROCCI, Christian, 38160 Saint-Marcellin (FR)
(74) Representative: Swea IP Law AB

(56) References cited:
- CN-U- 204 216 531
- DE-A1- 10 159 294
- US-A- 3 034 753
- US-A- 3 444 311
- US-A- 4 929 801

## Description

### Field of invention:

The present invention generally relates to mounting arrangements. More particularly the present invention relates to an adjustable mounting assembly with plurality of mounting brackets for electrical busways to mount and subsequently adjust its location manually in line with supporting hanger rod or pendant type beam member. This invention can also find its utility in the field in which an apparatus is required to be adjustably mounted in line with a supporting hanger rod or pendant type beam member.

### Background of the invention:

Existing mounting or hanging system for electrical apparatus like electrical busways do not have the flexibility to allow the fixation without tampering the tap-off unit fixations. The fixation comes around the busway, blocking some space on the front side, which obstructs the tap-off units and other components that could be installed on the busway. The installer has to identify the correct dimension and position before installation. If there is a minor change in dimension or unevenness of the roof or wall, its results in irregular positioning of busway, which increases the stress on the busway connection, and thus provides poor electrical conductivity and performance.

Existing mounting systems are installed around the electrical apparatus such as electrical busways and occupy the usable space for loads. In general the brackets will be precisely aligned and fixed with proper dimensions and position in order to make the installation.

In a known mounting assembly, at least three components are used to devise the mechanism of mounting electrical busways. Further, it doesn't provide flexibility to adjust the sliding of busway for correct position. Disadvantageously, in the existing mounting assembly only a single orientation of the electrical busway is managed with the mounting brackets.

Furthermore, in the existing technique for mounting electrical busways, it is very complex to assemble the mounting apparatus with the electrical busways. There exists no such mounting assembly known to any installer for attaching the busway the thereby adjust position and orientation of the electrical busways with minimum tools and efforts.

Therefore, existing mounting assembly with brackets requires complex mounting technique which is prone to create challenge for an installer such as:
- brackets installed around the electrical busway;
- not compatible with the functioning of continuous busway;
- does not provide the flexibility for easy alignment;
- no provision for installer to align without looking at the rear side.

US 3 444 311 A discloses a mounting assembly of an electrical busway according to the preamble of claim 1. US 3 034 753 A and CN 204 216 531 U disclose other mounting assemblies of electrical busways.

With a view therefore to the problems associated with the existing mounting systems and methods for electrical busways, the inventors felt to need to devise a novel mounting assembly comprising plurality of mounting brackets for mounting and subsequently arrange and adjust the orientation of the electrical busway. With at least one mounting bracket having omega profiled slotted holes, two different orientation of the electrical busway can be easily adjusted.

### Object of the invention:

It is, therefore, the principal object of this invention to provide a mounting assembly with easy adjustable mounting and positioning of electrical busway. The hanging provision, for example without any limitations, is a supporting hanger rod or pendant type beam member.

### Summary of the invention:

Accordingly, the present invention provides a mounting assembly for aligning electrical busway, said mounting assembly comprising a first mounting bracket (102), a second mounting bracket (104), a third mounting bracket (106), an electrical busway (112) and a supporting beam member (110):
- the first mounting bracket slidably attached to said electrical busway,
- the second mounting bracket removably attached with a supporting hanger rod,
- the third mounting bracket removably attachable with the supporting beam member wherein said first mounting bracket is provided with omega profiled slotted hole to be removably attached with either of said second mounting bracket or said third mounting bracket and thereupon align said electrical busway in an edgewise orientation, whereby edges of busbars (128) within it are in an up and down orientation, and the busbars (128) run horizontally and disposed in a spaced apart manner or flatwise orientation, whereby a flat side of the busbars (128) are in an up and down orientation, and the busbars (128) disposed vertically in a spaced apart manner, respectively,
wherein said third mounting bracket (106) is provided with a slit-shaped cutout (126) disposed at its center to receive said first mounting bracket (102), and wherein said first mounting bracket (102) is provided with a slit (126a) disposed at its side wall (117) to receive said third mounting bracket (106).

According to one embodiment of the invention, the first mounting bracket comprises two flat flanges formed at its edges to be slidably secured with said electric busway.

According to one embodiment of the invention, the second mounting bracket is removably attachable with a threaded hanger rod to move the electrical busway along the length of the hanger rod.

According to one embodiment of the invention, said second mounting bracket is provided with a central hole allowing said hanger rod to pass through said omega profiled slotted hole. According to one embodiment of the invention, said third mounting bracket is removably attached with a beam member to move the electrical busway along the length of the beam member, said beam member being a pendant-type beam member.

According to one embodiment of the invention, said beam member is provided with plurality of screwing holes disposed along its length in a spaced part manner for removably attaching said third mounting bracket.

According to one embodiment of the invention, said beam member is provided with a flat top surface having a set of screwing holes to attach said beam member with overhead running platforms.

According to one embodiment of the invention, said third mounting bracket is provided with a pair of stopping flanges attached on the beam member and thereby providing support to the electrical busway.

Another object of this invention is to provide plurality of mounting brackets, which will ease the assembly process and thereby substantially reduce mounting and positioning time along with labor cost during installation and erection.

Another object of the invention is to provide a simple in design, easy to make, rugged in construction, easy to fix and efficient in operation.

According to one object of the present invention the novel mounting assembly aids in easy installation of electrical busways to the wall or roof with minimum tools and resources. As the installation is simple, the time taken for assembly and installation is very low.

According to one embodiment of the invention, good flexibility is provided to have the tap-off units installed anywhere over the electrical busway, the invention will not block usable space which are dedicated for connecting the loads.

Another object of the present invention is to help the installer to find the right position and orientation with minimal efforts.

According to one embodiment of the invention, fixation provided in the invented mounting assembly is purely self-aligned, which results in correct position for installation. This feature eliminates the improper installation caused by poor dimensions, angularity and unevenness, in turn provides better robustness to system and improves the performance.

According to one embodiment of the invention, at least one mounting bracket of the mounting assembly is provided with the omega profile providing the easiness to align the electrical busway and the hanging provisions such as supporting hanger rod or pendant type beam member, at the at the right location and it also acts a guide for the intended orientation and installation.

According to one embodiment of the invention, flanges at the edges of the mounting bracket having omega profile helps to slide the mounting bracket to identify the correct position of the electrical busway. The profiles defined with the flanges, of said plurality of mounting bracket, provides the easy guiding path for inserting the electrical busway in flatwise orientation.

According to one embodiment of the invention, a stopper flange is disposed at the bottom portion of the third mounting bracket having omega profile. The stopper flange helps to act as a stopper and thereby providing robust support to the electrical busway.

According to one object of the invention, by aid of the first mounting bracket having omega profiled slotted holes, two different installation orientation of electrical busway can be adjusted. One of the installation orientation of the electrical busway is an edgewise orientation and other one is a flatwise orientation. Both orientations are very commonly used while installing an electrical busway.

According to one object of the invention, the first mounting bracket is provided for the sliding alignment of the electrical busway. The first mounting bracket takes care of sliding of the electrical busway to right or left orientation and locking with the supporting hanger rods or pendant type beam member, for better alignment.

With all these features, present invention provides complete robustness and ease of installation of electrical busway. The installer need not consider the improper uneven walls and/or roof, as the omega profiled first mounting bracket along with second and third mounting brackets provide self-aligning function with respect to for better installation.

### Brief description of the drawings:

For better understanding, an illustrative embodiment of the invention will now be described with reference to the accompanying drawings. It will however be appreciated that the embodiment exemplified in the drawings are merely illustrative and not limitative to the scope of the invention, because it is quite possible, indeed often desirable, to introduce a number of variations in the embodiment that have been shown in the drawings. In the accompanying drawings:

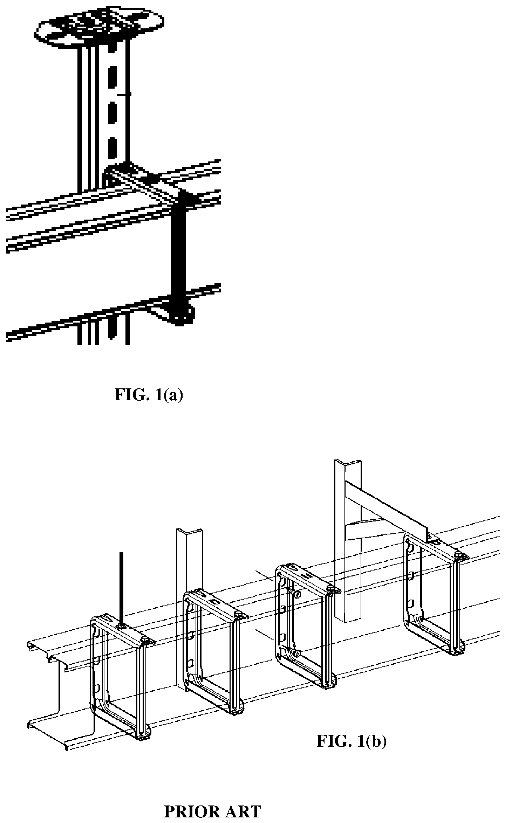

Figures 1(a) and 1(b) depict perspective view of the existing mounting apparatus for electrical busway.
Figure 2(a) is a perspective view of the invented mounting assembly attached with electrical busway in an edgewise orientation.
Figure 2(b) is another perspective view of the invented mounting assembly attached with electrical busway in an edgewise orientation as shown in figure 2(a).
Figure 3(a) is a perspective view of the invented mounting assembly attached with electrical busway in a flatwise orientation.
Figure 3(b) is another perspective view of the invented mounting assembly attached with electrical busway in a flatwise orientation as shown in figure 3(a).
Figure 4 is a perspective view of the invented mounting assembly disengaged from electrical busway in an edgewise orientation.
Figure 5 is a perspective view of the invented mounting assembly disengaged from electrical busway in a flatwise orientation.
Figure 6 is a perspective view a first mounting bracket of the invented mounting assembly according to one embodiment of the invention.
Figure 7 is a perspective view a second mounting bracket of the invented mounting assembly according to one embodiment of the invention.
Figure 8 is a perspective view a third mounting bracket of the invented mounting assembly according to one embodiment of the invention.
Figures 9(a) to 9(d) illustrate the mounting procedure of the invented mounting assembly with electrical busway in an edgewise orientation.
Figures 10(a) to 10(d) illustrate the mounting procedure of the invented mounting assembly with electrical busway in a flatwise orientation.

### Detailed description of the drawings:

In the following, numerous specific details are set forth to provide a thorough description of embodiment.

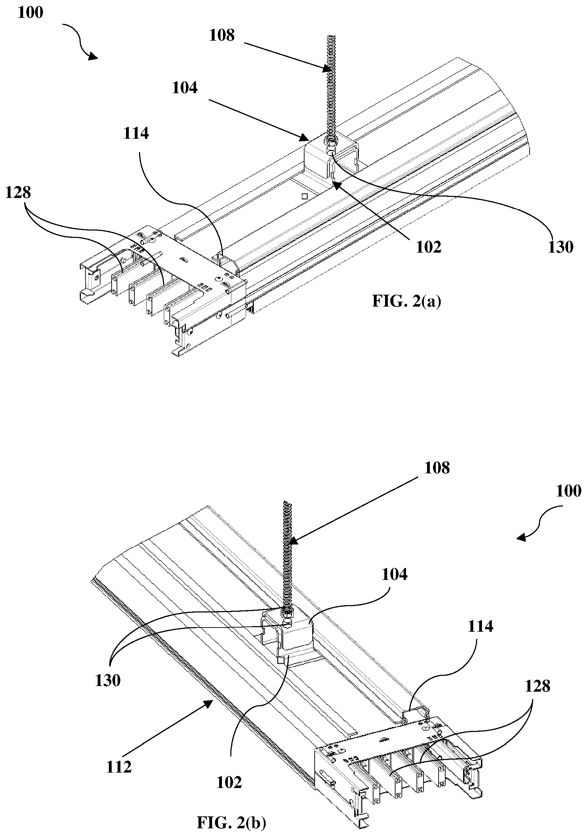

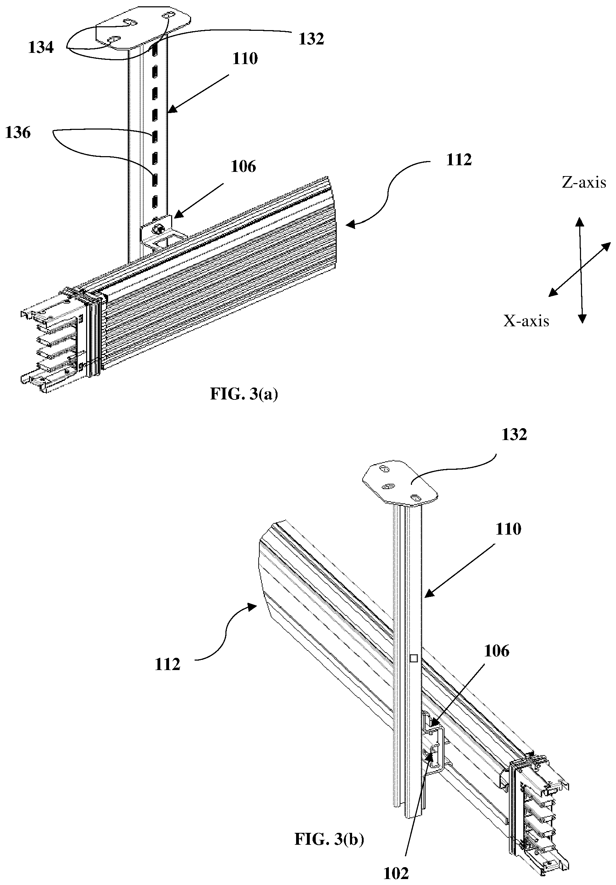

As seen in figures 2(a) and 2(b) the invented mounting assembly (100) is deployed for mounting and subsequently aligning an electrical busway (112) in a edgewise orientation. In the edgewise orientation of the electrical busway (112), the edges of the busbars (128) within it are in an up and down orientation, and the busbars (128) run horizontally and disposed in a spaced apart manner. In this orientation, bolt-on or plug-in units, according to requirement, drawing power from the electrical busway (112) are installed at the top and the bottom of the busbars (128). With reference to figures 3(a) and 3(b) the invented mounting assembly (100) is also deployed for mounting and subsequently aligning in electrical busway (112) in a flatwise orientation. In the flatwise orientation of the electrical busway (112), the flat side of the busbars (128) are in an up and down orientation, and the busbars (128) disposed vertically in a spaced apart manner. In this orientation, the plug-in or bolt-on units, according to requirement, for drawing power, are installed at the sides of the electrical busway (112). According to another object of the invention, the mounting assembly (100) can aid the above arrangement for electrical elements that have higher loads to be carried and need to be installed either edgewise or flatwise.

The mounting assembly (100), as shown in the accompanying figures, comprises a first mounting bracket (102), a second mounting bracket (104) and a third mounting bracket (106). At a time, only two mounting brackets are used to mount said electrical busway (112) and align either in edgewise or in flatwise orientation. In edgewise orientation, the first mounting bracket (102) is fastened to C-shaped slots (114) of the electrical busway (112) to slide thereon and the second mounting bracket (104) is fastened on a hanger rod (108) which comes from top running surface such as ceiling or overhead running platforms. In a flatwise orientation, the first mounting bracket (102) is slidably attached to the electrical busway (112) and provided with omega profiled slotted hole (118) to slide and the third mounting bracket (106) is bolted on the beam member (110) which comes from wall or ceiling.

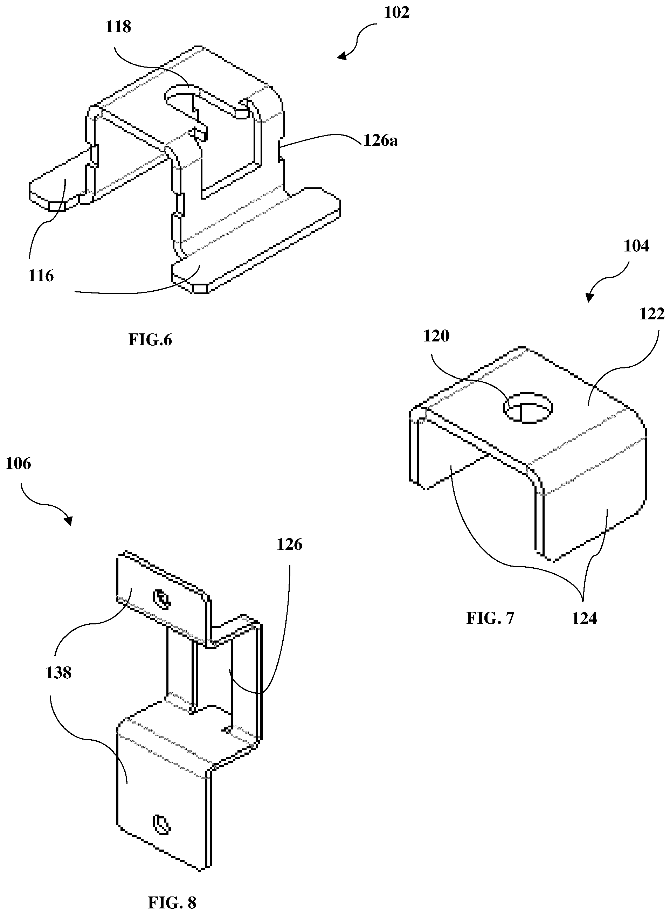

The first mounting bracket (102) as seen in figure 6, is common for both edgewise and flatwise orientation, which is slidably attached with the electrical busway (112). According to specific embodiment as seen in the figure 6, the first mounting bracket (102) is formed of sheet-like metal having an omega profile with two flanges (116) formed at the edges of a side wall for securing with the electrical busway (112). The side wall has slits (126c). The flanges (116), according to one preferred embodiment, are formed to slidably connect with C-shaped slots (114) available on the electrical busway (112). The flanges (116) also provide easy guiding path for inserting the electrical busway (112) in both flatwise and edgewise orientation.

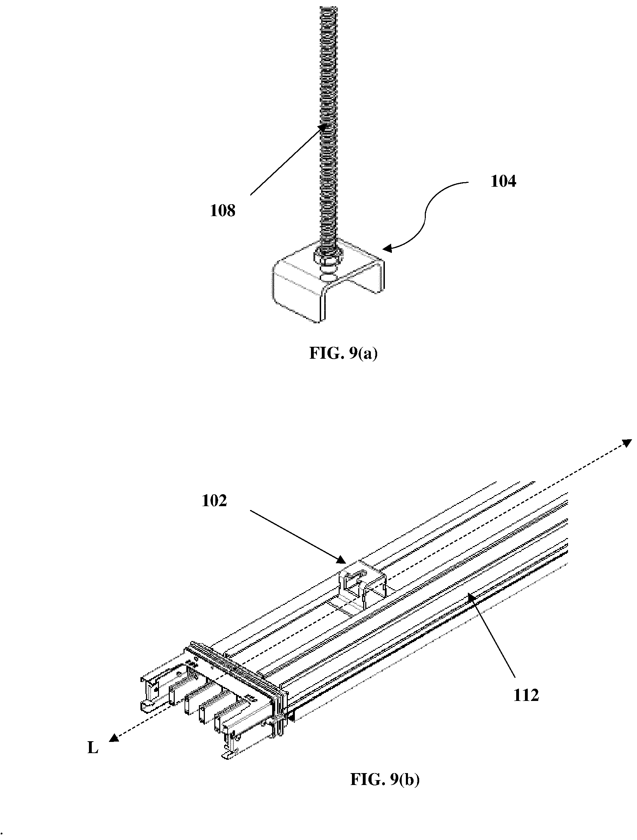

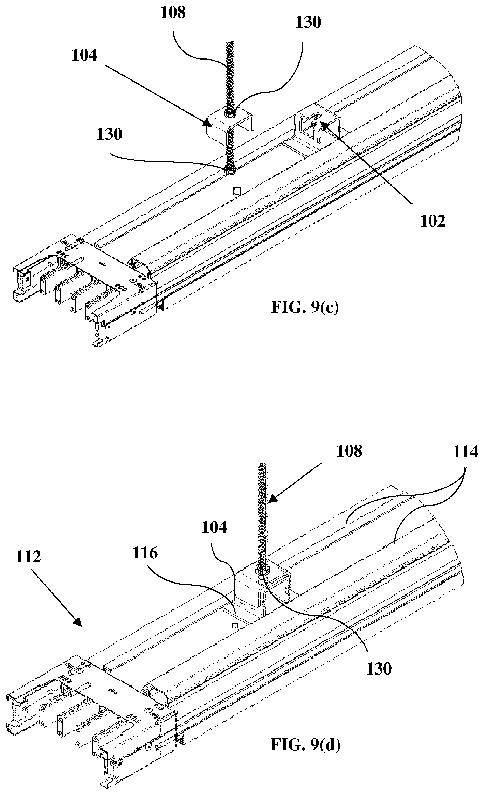

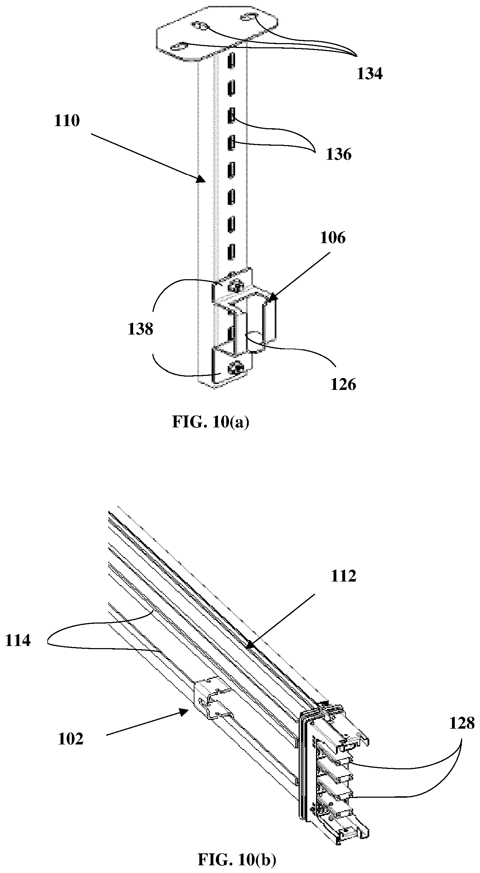

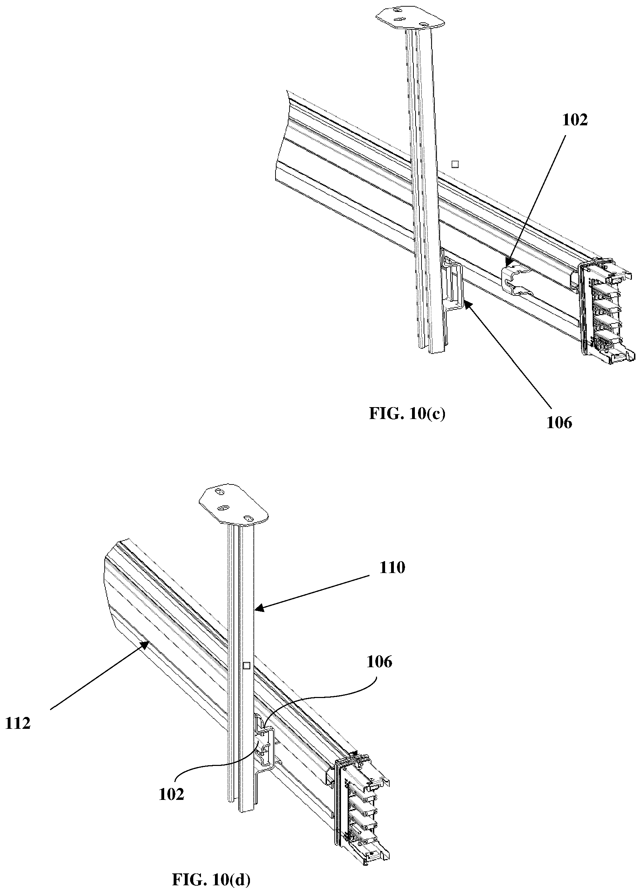

The C-shaped slots (114) provide for a rigid support while the first mounting bracket (102) is assembled either with the second mounting bracket (104) or with the third mounting bracket (106) to hold the electrical busway (112) in position. Alternatively, the flanges (116) can be formed having a congruent profile with respect to slots as available in the other electrical equipment that are to be mounted with invented mounting assembly (100). With this provision, the first mounting bracket (102), preferably is in line either with supporting hanger rod (108) or with pendant type beam member (110). The hanger rod (108), as shown at least in figure 9(a) and figure 9(c), provides adequate support in case of edgewise orientation. The beam member (110), as shown at least in figures 10(a) and 10(c), is used in case of flatwise orientation. The first mounting bracket (102) is further provided with omega profiled slotted hole (118).

The second mounting bracket (104) as seen in figure 7, is used for edgewise orientation which is engaged with the hanger rod (108). The hanger rod (108), according to a preferred embodiment, is threaded and accordingly said second mounting bracket (104) is provided with a central hole (120) for the hanger rod (108) to pass through. As the threaded provision of the hanger rod (108) is disposed in a helical manner, the second mounting bracket (104) can be rotated in order to translate along the extension of the hanger rod (108). Alternatively, the central hole (120) on the second mounting bracket (104) has such a diameter that the bracket can be moved freely along the hanger rod (108), and then fixed with fasteners (130) at an intended position.

When the second mounting bracket (104) is disposed onto the first mounting bracket (102) and attached using said fasteners (130). The electrical busway (112) can be moved along its extension by sliding the first mounting bracket (102) and also along the extension of the hanger rod (108) to reach intended position by translating the second mounting bracket (104) and thereupon alignment is taken care of. The omega profiled slotted hole (118) on the first mounting bracket (102) receives the hanger rod (108) and thereupon facilitates robust engagement of the first mounting bracket (102) and the second mounting bracket (104).

The third mounting bracket (106) as seen in figure 8, is used for flatwise orientation which is to be installed on a beam member (110). The beam member (110), as shown in the embodiment of figure 10(a), is a pendant type beam member. The beam member (110) is provided with a flat top surface (132) having a set of screwing holes (134), to attach with a top running surface such as ceiling or overhead running platforms or structures in the building. Another set of screwing holes (136) are disposed along the longitudinal extent of the beam member (110) in a spaced apart manner. The third mounting bracket (106) can be screwed with the screwing holes (136) and fixed thereon at an intended position.

The arrangement of the electrical busway (112) and the first mounting bracket (102) is attached with the third mounting bracket (106). Then by the virtue of the first mounting bracket (102), the electrical busway (112) can be translated along its length, say along X-axis. Whereas the vertical alignment, along the Z-axis can be controlled by attaching the third mounting bracket (106) along the length of said beam member (110), thereby controlling its alignment. With reference to figures 8 and 10(c) of the accompanying drawings, the third mounting bracket (106), is further provided with open omega profiles having a slit-shaped cutout (126) such that, the first mounting bracket (102) can be placed therein.

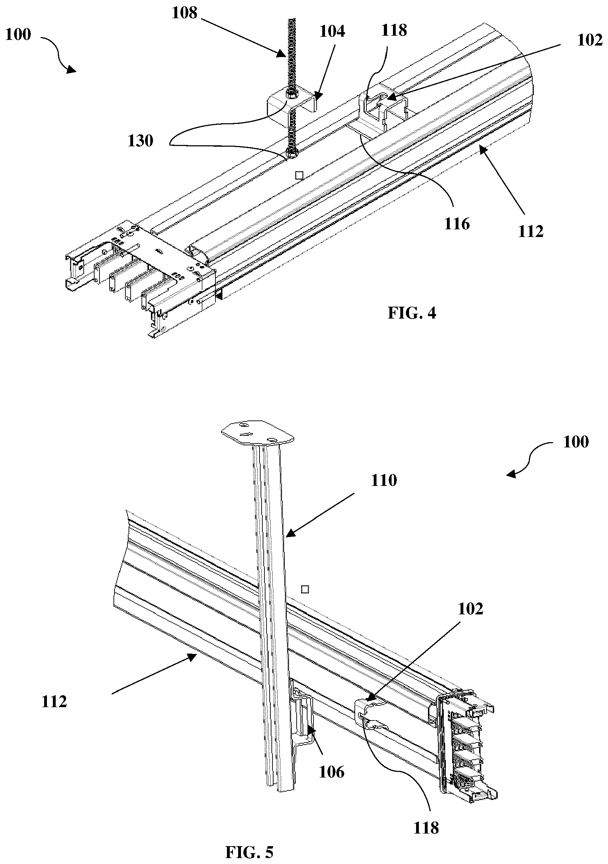

With reference to figures 4 and 5, an electrical busway (112) is mounted at edgewise and flatwise orientation respectively. While achieving a flatwise or edgewise orientation, initially the first mounting bracket (102) is attached with the electrical busway (112), creating a subassembly as shown in figures 9(b) and 10(b). This subassembly can then be installed with either the second mounting bracket (104) or the third mounting bracket (106).

With reference to figures 4 and 7, the second mounting bracket (104) is formed as a C-shaped sheet metal to be installed with said hanger rod (108). The second mounting bracket (104) is formed of a central region (122), and a pair of arms (124) transversely protruding from opposite edge of the central region (122). The central region (122) is generally flat which bends at its opposite edges to form the pair of arms (124). While mounting the electrical busway (112), the hanger rod (108) goes through the omega profiled slotted hole (118), and the pair of arms (124) comes in contact with the first mounting bracket (102). To provide a rigid support, at least two fasteners (130) are screwed over the threaded supporting hanger rod (108). The hanger rod (108), in turn bears the load of the electrical busway (112). The second mounting bracket (104) is disposed over the first mounting bracket (102) after the right position is found for installation to fix the electrical busway (112) rigidly.

The supporting hanger rod (108) is a standard rod available at various sizes and material. They are used for installation or hanging of equipment and electrical busways (112) from the wall or roof. The hanger rod (108) could also be suspended over a beam running overhead. The fasteners (130) are standard nuts commonly used in any installation site. The fasteners (130) are available in different sizes and materials, and can be chosen according to the choice of the hanger rod (108).

The third mounting bracket (106), as depicted in figure 8, is formed with an omega profile body having a slit-shaped cutout (126) running at the center of the bracket. Through this specific slit-shaped cutout (126), the first mounting bracket (102) is engaged and thereupon the mounting force and weight of electrical busway (112) is supported. The third mounting bracket (106) helps an installer to position the electrical busway (112) at a level according to the requirement of the installation site. The profile of the slit-shaped cutout (126) on the third mounting bracket (106) also aids in guiding the installation of electrical busway (112) to the intended position in a flatwise orientation. Further, a pair of stopping flanges (138) are formed at the bottom portion of the third mounting bracket (106). The stopping flanges (138), rest on the beam member (110), and thereby aid in providing robust support to the electrical busway (112). The third bracket (106), as seen in figure 10(a), can be mounted over the beam member (110), or could be fixed directly to the wall. The beam member (110), which is a pendant type beam member (110) is used for installation of electrical busway (112) on the wall.

The installation process of the electrical busway (112) with the aid of the invented mounting assembly (100) is illustrated in figures from 9(a) to 10(d). Figures 9(a) to 9(d) illustrate a step-by-step mounting procedure of electrical busway (112) with the invented mounting assembly (100) in an edgewise orientation. Figures 10(a) to 10(d) illustrate a step-by-step mounting procedure of electrical busway (112) with the invented mounting assembly (100) in a flatwise orientation.

Step 1: preparation of the installation area as shown in figures 9(a) and 10(a): Depending on the requirement of the orientation of the electrical busway (112), the installation area is constructed with either the second mounting bracket (104) or the third mounting bracket (106). As this one bracket (104 or 106), is placed according to the required placement of the electrical busway (112). The threaded hanger rod (108), as illustrated in figure 9(a), is engaged with second mounting bracket (104), and moved along the Z-axis until the required position is reached. The fasteners (130) are screwed over the hanger rod (108) to fix the mounting position of the second mounting bracket (104) along the Z-axis. As for the third mounting bracket (106) shown in figure 10(a), the stopping flange (138) is placed at an intended position on the beam member (110), and screwed thereon using the standard screws. Thus, it is conveniently managed by one bracket, being either second mounting bracket (104) or third mounting bracket (106) and standard fasteners.

Step 2: Preparation of electrical busway (112) elements to be installed as shown in figures 9(b) and 10(b): The electrical busway (112) is assembled with the first mounting bracket (102). As two flanges (116) formed at the edges of said first mounting bracket (102) slidably engage with electrical busway (112). The first mounting bracket (102) can traverse along the longitudinal length (L) of the electrical busway (112) to manually adjust its location, which provides complete flexibility to position the electrical busway (112).

Step 3: Installation of electrical busway (112) as shown in figures 9(c) and 10(c): The electrical busway (112) with first mounting bracket (102) attached therewith can now be inserted to the installation area by locking two brackets. One of the brackets being the first mounting bracket (102) and the other one being either second mounting bracket (104) or third mounting bracket (106). As shown in figure 9(c), second mounting bracket (104), attached with the hanger rod (108), is such aligned that it is put over the first mounting bracket (102) and locks thereon. The alignment of the third mounting bracket (106) with the first mounting bracket (102) is carried out in such a manner that the first mounting bracket (102) is disposed in-line the slit-shaped cut out (126) as shown in figure 10(c). Upon alignment, the first mounting bracket (102) is engaged through the slit-shaped cutout (126).

Step 4: Fixation of hanging provisions as shown in figures 9(d) and 10(d): Final step is to make a rigid fixation of the electrical busway (112) at an intended alignment and position by adjusting said first mounting bracket (102) with either the second mounting bracket (104) or third mounting bracket (106) and thereupon fastening at right torque with said hanger rod (108) or beam member (110) respectively. Thus ensuring that the electrical busway (112) is rigidly fixed to the hanging provisions, such as supporting hanger rod (108) or pendant type beam member (110). Tap-off unit installation can be managed anywhere, without any obstruction.

### Part List:

Mounting assembly 100
First mounting bracket 102
Second mounting bracket 104
Third mounting bracket 106
Hanger rod 108
Beam member 110
Electrical busway 112
C-shaped slots 114
Flanges (of first mounting bracket) 116
Omega profiled slotted hole 118
Central hole (of second mounting bracket) 120
Central region (of second mounting bracket) 122
Pair of arms 124
Slit-shaped cutout 126
Slit 126a
Busbars 128
Fasteners (on the hanger rod) 130
Flat top surface (of beam member) 132
Screwing holes (on the beam member) 134, 136
Stopping flanges (of third mounting bracket) 138

## Claims

1. A mounting assembly (100) for aligning an electrical busway (112), said mounting assembly (100) comprising a first mounting bracket (102), a second mounting bracket (104), a third mounting bracket (106), and the electrical busway (112) :
- the first mounting bracket (102) slidably attached to said electrical busway (112);
- the second mounting bracket (104) removably attachable with a supporting hanger rod (108);
**characterized in that** the mounting assembly further comprises a supporting beam member (110), and the third mounting bracket (106) is removably attached with the supporting beam member (110),
wherein said first mounting bracket (102) is provided with omega profiled slotted hole (118) to be removably attached with either of said second mounting bracket (104) or third mounting bracket (106) and thereupon align said electrical busway (112) in an edgewise orientation, whereby edges of busbars (128) within it are in an up and down orientation, and the busbars (128) run horizontally and disposed in a spaced apart manner or flatwise orientation, whereby a flat side of the busbars (128) are in an up and down orientation, and the busbars (128) disposed vertically in a spaced apart manner, respectively,
wherein said third mounting bracket (106) is provided with a slit-shaped cutout (126) disposed at its center to receive said first mounting bracket (102), and
wherein said first mounting bracket (102) is provided with a slit (126a) disposed at its side wall to receive said third mounting bracket (106).

2. The mounting assembly (100) for aligning electrical busway (112) as claimed in claim 1, wherein the first mounting bracket (102) comprises a pair of flanges (116) formed at its edges to be slidably secured with said electrical busway (112).

3. The mounting assembly (100) for aligning electrical busway (112) as claimed in claim 1 or 2, wherein the second mounting bracket (104) is removably attachable with a threaded hanger rod (108) to move the electrical busway (112) along the length of the hanger rod (108).

4. The mounting assembly (100) for aligning electrical busway (112) as claimed in claim 3, wherein said second mounting bracket (104) is provided with a central hole (120) allowing said hanger rod (108) to pass through said omega profiled slotted hole (118).

5. The mounting assembly (100) for aligning electrical busway (112) as claimed in claim 1 or 2, wherein said third mounting bracket (106) is removably attached to the beam member (110) to move the electrical busway (112) along the length of the beam member (110), said beam member (110) being a pendant-type beam member.

6. The mounting assembly (100) for aligning electrical busway (112) as claimed in claim 5, wherein said beam member (110) is provided with plurality of screwing holes (136) disposed along its length in a spaced part manner for removably attaching said third mounting bracket (106).

7. The mounting assembly (100) for aligning electrical busway (112) as claimed in claim 5 or 6, wherein said beam member (110) is provided with a flat top surface (132) having a set of screwing holes (134) to attach said beam member (110) with overhead running platforms.

8. The mounting assembly (100) for aligning electrical busway (112) as claimed in claim 1, wherein said third mounting bracket (106) is provided with a pair of stopping flanges (138) attached onto the beam member (110) and thereby providing support to the electrical busway (112).

## Patentansprüche

1. Montageanordnung (100) zum Ausrichten eines elektrischen Schienenverteilers (112), die Montageanordnung (100) umfassend eine erste Montagehalterung (102), eine zweite Montagehalterung (104), eine dritte Montagehalterung (106) und den elektrischen Schienenverteiler (112):
- wobei die erste Montagehalterung (102) an dem elektrischen Schienenverteiler (112) verschiebbar angebracht ist;
- die zweite Montagehalterung (104) an einer tragenden Aufhängestange (108) entfernbar anbringbar ist;
**dadurch gekennzeichnet, dass** die Montageanordnung ferner ein Trägerbalkenelement (110) umfasst und die dritte Montagehalterung (106) an dem Trägerbalkenelement (110) entfernbar angebracht ist,
wobei die erste Montagehalterung (102) mit einem Omega-Profil-Schlitzloch (118) versehen ist, um entweder mit der zweiten Montagehalterung (104) oder der dritten Montagehalterung (106) entfernbar angebracht zu werden und daraufhin den elektrischen Schienenverteiler (112) in einer Hochkantausrichtung auszurichten, wobei die Kanten der Sammelschienen (128) innerhalb davon in einer Auf- und Ab-Ausrichtung sind und die Sammelschienen (128) horizontal verlaufen und auf eine beabstandete Weise oder in flacher Ausrichtung eingerichtet sind, wobei eine flache Seite der Sammelschienen (128) in einer Auf- und Ab-Ausrichtung sind bzw. die Sammelschienen (128) auf eine beabstandete Weise vertikal eingerichtet sind,
wobei die dritte Montagehalterung (106) mit einem schlitzförmigen Ausschnitt (126) versehen ist, der in ihrer Mitte eingerichtet ist, um die erste Montagehalterung (102) aufzunehmen, und
wobei die erste Montagehalterung (102) mit einem an ihrer Seitenwand eingerichteten Schlitz (126a) versehen ist, um die dritte Montagehalterung (106) aufzunehmen.

2. Montageanordnung (100) zum Ausrichten eines elektrischen Schienenverteilers (112) nach Anspruch 1, wobei die erste Montagehalterung (102) ein Paar Flansche (116) umfasst, die an ihren Kanten ausgebildet sind, um an dem elektrischen Schienenverteiler (112) verschiebbar befestigt zu werden.

3. Montageanordnung (100) zum Ausrichten eines elektrischen Schienenverteilers (112) nach Anspruch 1 oder 2,
wobei die zweite Montagehalterung (104) mit einer mit Gewinde versehenen Aufhängestange (108) entfernbar anbringbar ist, um den elektrischen Schienenverteiler (112) entlang der Länge der Aufhängestange (108) zu bewegen.

4. Montageanordnung (100) zum Ausrichten eines elektrischen Schienenverteilers (112) nach Anspruch 3, wobei die zweite Montagehalterung (104) mit einem zentralen Loch (120) versehen ist, das es der Aufhängestange (108) ermöglicht, durch das Omega-Profil-Schlitzloch (118) zu verlaufen.

5. Montageanordnung (100) zum Ausrichten eines elektrischen Schienenverteilers (112) nach Anspruch 1 oder 2,
wobei die dritte Montagehalterung (106) an dem Balkenelement (110) entfernbar angebracht ist, um den elektrischen Schienenverteiler (112) entlang der Länge des Balkenelements (110) zu bewegen, wobei das Balkenelement (110) ein Balkenelement vom Hängetyp ist.

6. Montageanordnung (100) zum Ausrichten eines elektrischen Schienenverteilers (112) nach Anspruch 5, wobei das Balkenelement (110) mit einer Vielzahl von Schraubenlöchern (136) versehen ist, die entlang seiner Länge auf eine beabstandete Weise eingerichtet sind, zum entfernbaren Anbringen der dritten Montagehalterung (106).

7. Montageanordnung (100) zum Ausrichten eines elektrischen Schienenverteilers (112) nach Anspruch 5 oder 6, wobei das Balkenelement (110) mit einer flachen oberen Oberfläche (132) versehen ist, die einen Satz von Schraublöchern (134) aufweist, um das Balkenelement (110) an darüberliegenden Laufplattformen anzubringen.

8. Montageanordnung (100) zum Ausrichten eines elektrischen Schienenverteilers (112) nach Anspruch 1, wobei die dritte Montagehalterung (106) mit einem Paar Anschlagflansche (138) versehen ist, die auf dem Balkenelement (110) angebracht sind und dadurch dem elektrischen Schienenverteiler (112) einen Träger bereitstellen.

## Revendications

1. Ensemble de montage (100) permettant d'aligner une barre blindée électrique (112), ledit ensemble de montage (100) comprenant un premier support de montage (102), un deuxième support de montage (104), un troisième support de montage (106), et la barre blindée électrique (112) :
- le premier support de montage (102) est attaché de manière coulissante à ladite barre blindée électrique (112) ;
- le deuxième support de montage (104) peut être attaché de manière amovible à une tige de suspension (108) ;
**caractérisé en ce que** l'ensemble de montage comprend en outre un élément de poutre de support (110), et le troisième support de montage (106) est attaché de manière amovible à l'élément de poutre de support (110),
dans lequel ledit premier support de montage (102) est pourvu d'un trou oblong profilé en oméga (118) pour être attaché de manière amovible avec l'un ou l'autre desdits deuxième support de montage (104) ou troisième support de montage (106) et ainsi aligner ladite barre blindée électrique (112) dans le sens des bords, moyennant quoi des bords de barres omnibus (128) dans celle-ci sont orientés vers le haut et vers le bas, et les barres omnibus (128) s'étendent horizontalement et sont disposées de manière espacée ou à plat, moyennant quoi un côté plat des barres omnibus (128) est orienté vers le haut et vers le bas, et les barres omnibus (128) sont disposées verticalement de manière espacée, respectivement.,
dans lequel ledit troisième support de montage (106) est pourvu d'une découpe en forme de fente (126) disposée en son centre pour recevoir ledit premier support de montage (102), et
dans lequel ledit premier support de montage (102) est pourvu d'une fente (126a) disposée au niveau de sa paroi latérale pour recevoir ledit troisième support de montage (106).

2. Ensemble de montage (100) permettant d'aligner une barre blindée électrique (112) selon la revendication 1, dans lequel le premier support de montage (102) comprend une paire de brides (116) formées au niveau de ses bords pour être attachée de manière coulissante à ladite barre blindée électrique (112).

3. Ensemble de montage (100) permettant d'aligner une barre blindée électrique (112) selon la revendication 1 ou 2,
dans lequel le deuxième support de montage (104) peut être attaché de manière amovible à une tige de suspension filetée (108) pour déplacer la barre blindée électrique (112) sur la longueur de la tige de suspension (108).

4. Ensemble de montage (100) permettant d'aligner une barre blindée électrique (112) selon la revendication 3, dans lequel ledit deuxième support de montage (104) est pourvu d'un trou central (120) permettant à ladite tige de suspension (108) de passer à travers ledit trou oblong profilé en oméga (118).

5. Ensemble de montage (100) pour l'alignement d'une barre blindée électrique (112) selon la revendication 1 ou 2,
dans lequel ledit troisième support de montage (106) est attaché de manière amovible à l'élément de poutre (110) pour déplacer la barre blindée électrique (112) sur la longueur de l'élément de poutre (110), ledit élément de poutre (110) étant un élément de poutre de type suspendu.

6. Ensemble de montage (100) permettant d'aligner une barre blindée électrique (112) selon la revendication 5, dans lequel ledit élément de poutre (110) est pourvu d'une pluralité de trous de vissage (136) disposés sur sa longueur de manière espacée pour attacher de manière amovible ledit troisième support de montage (106).

7. Ensemble de montage (100) permettant d'aligner une barre blindée électrique (112) selon la revendication 5 ou 6, dans lequel ledit élément de poutre (110) est pourvu d'une surface supérieure plate (132) possédant un ensemble de trous de vissage (134) pour attacher ledit élément de poutre (110) à des plates-formes situées en hauteur.

8. Ensemble de montage (100) permettant d'aligner une barre blindée électrique (112) selon la revendication 1, dans lequel ledit troisième support de montage (106) est pourvu d'une paire de brides d'arrêt (138) attachée sur l'élément de poutre (110) et fournissant ainsi un support à la barre blindée électrique (112).
